# EUROPEAN PATENT APPLICATION

(11) **EP 4 248 742 A1**
(43) Date of publication of application: **27.09.2023**
(21) Application number: 22462002.1
(22) Date of filing: 23.03.2022
(51) Int. Cl.: A01K 63/00

(54) **MODULAR FISH FARMING SYSTEM**

(71) Applicant: GS-Pipe Mérnöki, Kereskedelmi És Szolgáltató Kft., 2045 Törökbálint (HU)
(72) Inventor: Séra, Milán, H-1118 Budapest (HU); Urbányi, Béla, H-2049 Diósd (HU); Csorbai, Balázs, H-2193 Galgahévíz (HU)
(74) Representative: Danubia Patent & Law Office LLC

(57) **Abstract**

The modular fish farming system (100) comprises fish farming tanks (100,112), a water supply network (120) and a drainage network (130) connected to the tanks, and a circulating pump (138) and a mechanical filter (134), both connected to the water supply network. The system further comprises a moving bed biological filter unit (140) interposed between the water supply network (120) and the drainage network (130), wherein said filter unit contains a biomedia with an active surface as a filter material, said biomedia providing an adequate habitat for micro-organisms that transform the ammonium ions in the used water coming from the drainage network (130) into nitrates; an air blower (160) connected to the biological filter unit (140) and the tanks (110, 112) for supplying oxygen to the tank water and biomedia; and a programmable logic circuit (170) for controlling and monitoring the operation of the system. The tanks (110, 112) are designed in at least two different sizes according to the size of the farmed fish. At least the circulation pump (138), the mechanical filter (134), the air blower (160) and the programmable logic circuit (170) are designed to form a separate module.

## Description

The present invention relates to a modular fish farming system.

Closed-circuit, precision fish production dates back a few decades. Nevertheless, many elements of breeding technology have already been highly developed. However, these systems have typically been developed to serve large capacities (large numbers of individuals). Although fish farming tools and equipment are available on the market, they do not form a single uniform system from hatching to harvesting, so the end user must have substantial professional knowledge to build a simple fish farming system, while the implementation of a complex fish farming system requires very expensive, individual on-site design and construction.

A modular system suitable for raising fish, among others, is described, for example, in the documents US 2020236883 A1. This system comprises stacked trays for storing fish or aquatic plants. The trays can be moved with a motorized lifting device.

A modular fish farming system for ponds is described in the document CN 109997759.

The disadvantage of the modular systems described above is that they do not allow the circulation of the water in the tanks and thus its filtration, and due to their design the installation of additional tanks next to the existing containers or tanks is not possible or it is very difficult.

It is an object of the present invention to eliminate the disadvantages of the known fish farming systems and to provide a modular fish farming system which allows the water in the ponds to be circulated and thus to be continuously filtered, and which is modularly expandable, easy to install and able to meet the needs of most freshwater fish species.

The above objects are achieved by a modular fish farming system in which the water circulation, filtration and monitoring system together form a stand-alone module and which system is thus able to maintain the desired water quality for fish even with feeding of supplementary water at a low rate, essentially regardless of the number of the tanks.

The structure of the modular fish farming system according to the invention is defined in claim 1. Preferred embodiments of the modular fish farming system are described in the dependent claims.

The advantages of the modular fish farming system according to the invention are mainly achieved in terms of the modular design, the energy efficiency, the use of renewable energy sources, the stable and affordable central control, thus providing a solution to the problems faced by smallholders when they wish to adapt the tools and/or systems currently available on the market. The size and the energy efficiency of the modular fish farming system of the present invention are close to the production values of the state-of-the-art fish farms, while they require significantly lower investment and operating cost. This is due to the fact that the fish farming system uses renewable energy sources, thus being able to grow several fish species with similar needs at the same time with energy savings and low live labour requirements. One of the important features of the modular fish farming system according to the invention is that it does not require significant earthwork and construction investment, and in some cases, it is excellent for the use of existing but unused halls, stables and other brownfield investment areas.

The invention will now be described in more detail with reference to the accompanying drawings. In the drawings:
- Figure 1 schematically illustrates the arrangement of the main units of a modular fish farming system according to the invention;
- Figure 2 illustrates an exemplary arrangement of the mechanical units of the modular fish farming system in a transportable container, in accordance with the present invention;
- Figure 3 shows an example of the arrangement of the tanks and the pipe networks connected to them;
- Figure 4 illustrates the biological filter used in the system of the present invention and its connection to other elements of the system.

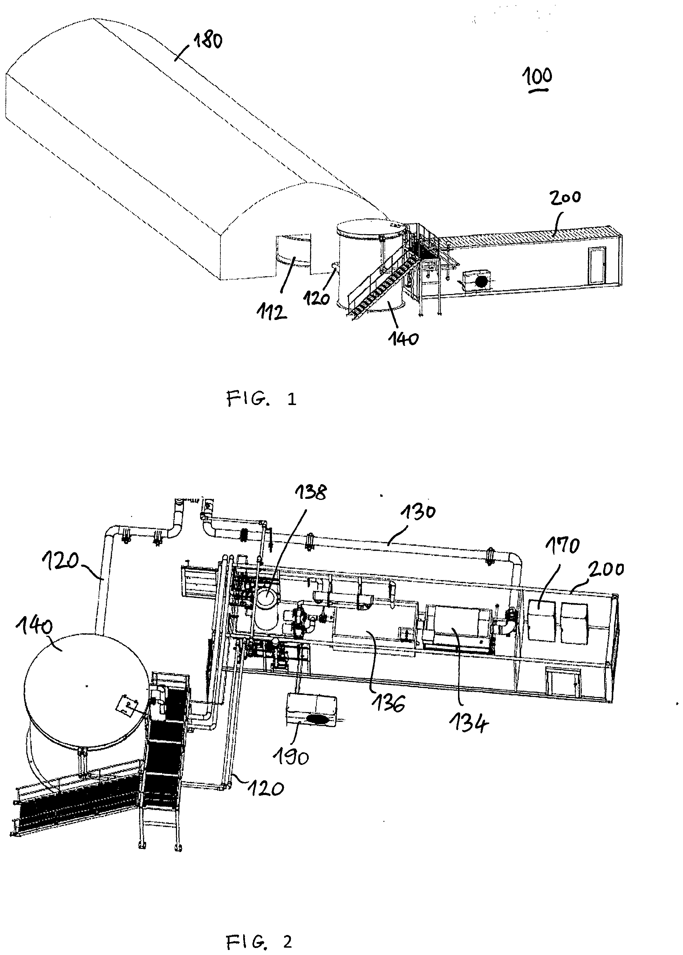

The main units of the modular fish farming system according to the invention and their arrangement are schematically illustrated in Figure 1. The system 100 includes a plurality of fish farming tanks installed in at least two different sizes; fingerling rearing tanks 110 typically have a volume of 3.5 m³, these tanks are used to fingerling rearing, while fish tanks 112 have a volume of typically 15 m³ and are used to ongrowing phase.

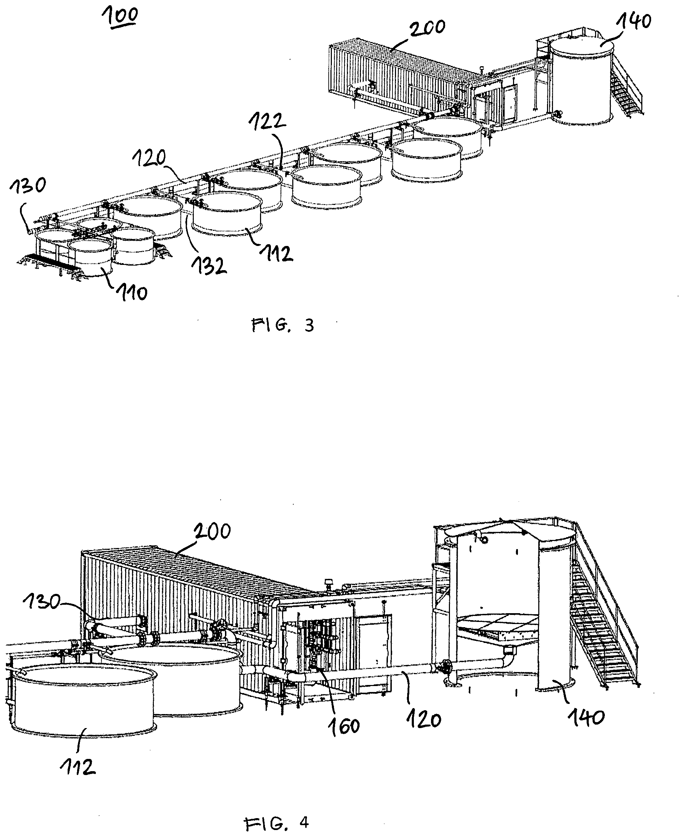

As shown in Figures 1 and 3, the water supply to the tanks is provided by a water supply network 120 having a branch 122 for each tank 110, 112 and a computer-controlled tap 124 on each branch 122.

The drainage of the used water from the tanks is provided by a drainage network 130, which also has a separate branch 132 for each tank and a manually operated drain valve (not shown).

The water supply network 120 is connected to a biological filter unit 140 which performs biological filtration of the water to be introduced into the tanks. The biological filtration is based on that the potentially toxic ammonium ions excreted by the fish are converted into less harmful nitrate by the microorganisms living in the filter. In a preferred embodiment of the system according to the invention, the biological filter unit 140 is a moving bed biological filter with a total volume of 23 m³ and containing 11 m³ of biomedia with a minimum active surface area of 600 m²/m³. With such parameters, the biological filter unit 140 is capable of processing the nitrogen metabolism product originating from at least 60 kg of complex fish feed. The construction of the biological filter 140 and its connection to other elements of the system 100 is schematically illustrated in Figure 4.

As shown in FIG. 2, the drainage network 130 directs the used water through a mechanical filter 134 to a balancing tank 136, from which the purified used water is supplied by a circulating pump 138 to the biological filter 140, and from there to the water supply network 120 by gravity.

The mechanical filter 134 may be, for example, a drum filter of the type NOV-ARB/PP-100/65, which has a mesh size of 100 µm and a capacity of 150-360 m³/h and an electrical power consumption of 0.6 kW (of which 0.25 kW is the power of the rotary actuator and 0.35 kW is the power of the backwash pump).

In a preferred embodiment of the system according to the invention, the circulation pump 138 consists of two pumps of the type Pedrollo F4/160A with a maximum capacity of 150 m³/h at 60 Hz and 120 m³/h at 50 Hz .

The air supply to the biological filter unit 140 and to the tanks 110, 112 is provided by an air blower 160, which may be, for example, an Elektror SD 740 max air blower with a maximum volume flow of 6.8 m³/min.

In the system 100 according to the invention, in order to control the water level of the pools 110, 112, the system 100 is preferably provided with volume flow meters. Due to the different control ranges, different types of measuring devices are used for the fingerling rearing pools 110 and the fish farming pools 112. For example, a volume flow meter of the type Kobold MIK-5NA 80 K L343 may be used for fingerling rearing tanks 110 and a volume flow meter of the type Comaq CC FLOW FL38H/DN80 for the ongrowing tank 112.

In a preferred embodiment of the system 100 according to the invention, the operational safety is guaranteed by the instruments for measuring the oxygen concentration and the pH value placed in the tanks 110, 112. The oxygen concentration measuring instrument may be, for example, the TriOxmatic 700 IQ + IQ SensorNet DIQ/S284 and the pH measuring instrument may be the Mettler Toledo Sensor EasySense pH 32 + Transmitter M200 1-CH ½ DIN.

In the system 100, the appropriate temperature of the water in the tanks 110, 112 is preferably maintained by a heating unit 190 as shown in FIG. 2. The heating unit may be, for example, a Stiebel-Eltron HPA-O 13 heat pump which heats the water supplied to the water supply network 120. It is preferred that the tanks 110, 112 have one or more UV light sources to provide a low germ count. A suitable UV sterilizer for this purpose is the UV Ultra Aqua MR3-350 PP 1.1 kW UV lamp with a nominal filtration capacity of 120 m³/h.

The electrical and electronic components of the system 100 are controlled and monitored by a programmable logic circuit (PLC) 170 configured for the system, which preferably has a GSM alarm function and remote access capability.

The tanks 110, 112 are preferably arranged inside a greenhouse 180 with good thermal insulation, such as a double-walled greenhouse, which has an openable side for ventilation on demand.

The mechanical units of the system 100, in particular the circulating pump 138, the mechanical filter 134, the air blower 160, the heating unit 190 and the PLC 170, are preferably arranged within a transportable container 200 which allows the combined mechanical units to be easily transported and thereby simplifying the on-site installation of the system 100.

The operation of the modular fish farming system according to the invention will now be described with reference to FIGS. 1 to 4.

The first step is to fill the system 100 with water after its installation. Preferably, the filling water is well water, but it may also be artesian water or even tap water. The quality of the water fed to the tanks 110, 112 is mainly influenced by the following parameters, to which special attention should be paid:
- gas content
- the amount of inorganic nitrogen compounds
- phenol content
- pH value
- total salinity
- German hardness of water

Already at the design stage of the system, it is worth checking these parameters for the installation site and, where possible, ecotoxicological testing of the planned system on a sample of selected fish may be particularly effective. Based on the measured parameters and the results of the ecotoxicological tests, those skilled in the art will be able to determine whether the water available on site is suitable for filling or replenishing the tanks of the modular fish farming system of the present invention.

If water of adequate quality and/or quantity is not available, the use of surface water may be considered, but pre-filtration and sterilization are required. The system is refilled with water from an external source (such as tap water) through the water supply system, so the system water temperature can be raised if necessary.

When starting the system, the first step is to close the flow valve. Using a pump, the biological filter unit 140 is filled up to the operating level in a manual mode, in this case to a level of 215 cm. The non-return valve is then closed and a pre-filling tank is pumped empty. The flow valve and the return valve are then opened simultaneously. After that, changes in the level of the pre-filling tank are monitored for a short time, such as ten minutes. Finally, the system 100 may be switched to an automatic mode.

Each tank 110, 112 is filled and started depending on the amount of filling water. If the water level in the pre-filling tank and the biological filter unit 140 is at maximum, the water circulation within the system can be started. If supplementary water is then added to the system, it will leave the overflow of the pre-filling tank. An additional tank to be put into operation can be filled by opening the tank tap according to the amount of the supplementary water. If the water level in the pre-filling tank becomes steady below the overflow level, the filling rate is correct.

The system preferably has two circulating pumps 138 for circulating the water. Although the circulating pumps 138 alone can provide the water flow needed to operate the system, we use two circulating pumps for operational safety and energy efficiency. The circulating pumps 138 operate with a frequency converter, so the power of the circulating pumps 138 can be reduced or increased depending on how many tanks are in operation. This setting option is also important because it can significantly reduce power consumption. The frequency of the motor must be adjusted so that a relatively small amount of water flows through the overflow branch of the biological filter unit 140 into the balancing tank 136.

The air blower 160 is primarily intended to supply oxygen to the biological filter unit 140. For this reason, the air blower 160 is designed for constant operation and constant power. The oxygen supply diffusors used in the tanks 110, 112, which locally increase the amount of dissolved oxygen in the water, automatically supply air to the tanks 110, 112 through solenoid valves that open and close.

The mechanical filter 134, which is preferably a drum filter, filters the water rich in suspended sediment returning from the tanks 110, 112 through a mesh of 100 µm. The system 100 of the present invention preferably has an automatic backwash system with a level switch. The backwash system receives the water needed for backwash through the fresh water network, which is 1-5% of the total amount of water in the system, depending on the amount of fish farmed.

The biological filter unit 140 must be filled with the appropriate type of 12 m³ of biomedia for the first time upon installation. It is preferably added to the system in several steps in doses of 3 m³. After feeding the first dose, the air blower 160 is started and then another dose can be fed if the first dose no longer floats on the surface of the water in the filter unit. This process should continue until all 12 m³ of media has entered the system and is moving continuously. The development of a bacterial flora for biological screening can then begin. According to the general practice, this process can be carried out by adding small doses of inorganic nitrogen compounds, in particular ammonium chloride, and reaches the required state in about a month. Another way to start the biological filter unit 140 is to take over the starter culture from another already functioning recirculation system, but in this case, there is a risk of introducing infections.

All tanks 110 and 112 can be operated in two modes: a half-full mode and a full mode. The volumes of the tanks 110, 112 are 1.75 m³ and 3.3 m³, respectively, in the case of fingerling rearing 110 tanks, and 7.5 m³ and 15 m³, respectively, in the case of adult fish. When stocking the tanks 110, 112, it is worth selecting the half-full mode and only fill them fully after the fish have calmed down and do not jump out from the tanks.

It is advisable to start fishing for adult fish from the tanks 112 in the full mode thereof for the easier removal of the fish, and it is advisable to lower the water level only during the final stages of harvesting.

Based on a large number of experiments performed, it can be said that the modular fish farming system according to the invention provides an excellent infrastructure for farming different fish species on one site. Applicability can be achieved under the following conditions:
- The system is able to provide the necessary conditions for breeding freshwater fish species selected for farming.
- The heating capacity of the system is Δt=+10 °C compared to the ambient temperature, so the given fish species can be farmed successfully if the daily average temperature of the environment does not differ from the minimum temperature requirement of the desired fish species. If a higher heating capacity is required, the system can also be adapted to provide it.
- The system does not have a cooling capacity, so if the daily average outdoor temperature exceeds the optimal range, the fish farming system can only be used if the temperature of the supplementary water fed into the system is lower than the outdoor air temperature (cooling effect).
- The modular fish farmer should not be permanently exposed to direct sunlight, as it can easily overheat in this case. If there is a risk of this, it is advisable to paint the greenhouse foil with a shading paint (e.g. ECLIPSE F4 or equivalent).
- The modular system with a total capacity of 120 m³ is approx. 12 m³, based on hydrochemical parameters, requires supplementary water of ideal quality for the farmed fish species.
- Power consumption of the modular fish farming system: 400 V mains voltage, 50 Hz mains frequency, 3 phases, max. 40 A current per phase.
- In addition to the supply of 12 m³ of supplementary water per day, the system is suitable for farming ca. 4.5 t of fish.
- The modular fish farming system is able to provide a total ammonium level of 0.5 mg/l and a nitrite level of 0.3 mg/l when a feed containing 5 kg of nitrogen is applied.

## Claims

1. A modular fish farming system (100) comprising fish farming tanks (100, 112), a water supply network (120) and a drainage network (130) connected to the tanks, and a circulating pump (138) and a mechanical filter (134), both connected to the water supply network.
**characterized in that**
- the system further comprises
- a moving bed biological filter unit (140) interposed between the water supply network (120) and the drainage network (130), wherein said filter unit contains a biomedia with an active surface as a filter material, said biomedia providing an adequate habitat for micro-organisms that transform the ammonium ions in the used water coming from the drainage network (130) into nitrates;
- an air blower (160) connected to the biological filter unit (140) and the tanks (110, 112) for supplying oxygen to the tank water and biomedia; and
- a programmable logic circuit (170) for controlling and monitoring the operation of the system;
- wherein the tanks (110, 112) are designed in at least two different sizes according to the size of the farmed fish; and
- wherein at least the circulation pump (138), the mechanical filter (134), the air blower (160) and the programmable logic circuit (170) are designed to form a separate module.

2. The system of claim 1, wherein the mechanical filter (134) is a drum filter.

3. The system of claim 1 or 2, wherein it comprises fingerling rearing tanks (110) with a volume of 3.5 m³ and ongrowing tanks (112) with a volume of 15 m³.

4. The system of any one of claims 1 to 3, wherein the circulating pump (138), the mechanical filter (134), the air blower (160) and the programmable logic circuit (170) are arranged in a transportable container (200).

5. The system of any one of claims 1 to 4, wherein the system further comprises a heating unit (190) for maintaining the water in the tanks (110, 112) at a predetermined temperature.

6. The system of any one of claims 1 to 5, wherein the tanks (110, 112) are arranged in a greenhouse (180) made of a double-layer material.
